(19) Europäisches Patentamt
European Patent Office
Office européen des brevets

(11) **EP 1 421 352 B1**

(12) **EUROPEAN PATENT SPECIFICATION**

(45) Date of publication and mention
of the grant of the patent:
**17.09.2008 Bulletin 2008/38**

(51) Int Cl.:
*G01G 13/00* (2006.01)   *G01G 19/387* (2006.01)

(21) Application number: **02787168.0**

(22) Date of filing: **12.07.2002**

(86) International application number:
**PCT/IS2002/000012**

(87) International publication number:
**WO 2003/008917 (30.01.2003 Gazette 2003/05)**

(54) **A METHOD AND AN APPARATUS FOR BATCHING ITEMS**

VERFAHREN UND VORRICHTUNG ZUR BATCH-VERARBEITUNG VON ARTIKELN

PROCEDE ET APPAREIL PERMETTANT DE METTRE DES ARTICLES EN LOT

(84) Designated Contracting States:
**AT BE BG CH CY CZ DE DK EE ES FI FR GB GR IE IT LI LU MC NL PT SE SK TR**

(30) Priority: **17.07.2001 IS 600801**
**17.07.2001 US 305860 P**

(43) Date of publication of application:
**26.05.2004 Bulletin 2004/22**

(73) Proprietor: **Marel HF.**
**210 Gardabaer (IS)**

(72) Inventors:
• **HJALMARSSON, Helgi**
**IS-105 Reykjavik (IS)**
• **ASGEIRSSON, Agni**
**IS-200 Kopavogur (IS)**
• **TOMASSON, Kristberg**
**IS-105 Reykjavik (IS)**
• **EIRIKSSON, Steindor**
**IS-105 Reykjavik (IS)**
• **STEINSSON, Sveinn, Arnar**
**Is-220 Hafnarfjordur (IS)**
• **OLAFSSON, Jon, Thor**
**IS-210 Gardabaer (IS)**

(74) Representative: **Arnason Faktor**
**Intellectual Property Group**
**Efstaleiti 5**
**103 Reykjavik (IS)**

(56) References cited:
**WO-A-99/44759**        **GB-A- 2 116 732**
**US-A- 4 010 809**       **US-A- 4 313 507**

**Description**

**Field of the invention**

This invention relates to a method and apparatus for generating at least one batch with at least one characteristic property by dividing the flow of items into at least one coarse-flow and one fine-flow.

**Background**

In various industries, basic items are sold in batches satisfying various constraints. For example, many food items (such as fresh or frozen fish portions) are sold in pre-packed batches having a predetermined weight and/or number of pieces. Batching has developed as a result of contracts between sellers and purchasers for delivery of items, that must satisfy minimum weight or other requirements. It is very important that none of the collections is below minimum weight limit, whereas exceeding this weight results in an economical loss for the manufacturer, and has impact on the transportation costs, taxation fees etc.

It is known that it is difficult to obtain portions consisting of a predetermined number of parts when it is also required that the weight is fixed. This is particularly difficult when the weight distribution of the items is large. This can be achieved manually, which is difficult to obtain and is time consuming.

Different methods have been developed aiming at minimizing the overweight of a batch and even maintaining a predetermined number of pieces in the batch.

A simple portioning is a simple and fast method where the flow of items is run directly into a hopper wherein the weight of the hopper is registered with a maximum accuracy of half the item weight. When the weight has reached the coarse weight limit the portioning into that particular hopper is stopped.

Batching is a method where portions are weighed and the right portion for a particular batch can be selected out with the aim of minimizing the overweight of that batch. This method has the advantage that is an accurate method, where the overweight under half of the portion-weight can be reached. The problem is however how complicated and slow the method is compared to the portioning method.

One way to lower the overweight further is to apply statistical calculations based on registering the weight distribution of the incoming items and based thereon calculate the probability of new-coming items to fit into the already partly established portions. The statistical methods typically require a powerful computer system and complicated software. Furthermore often the weight distribution of the items is assumed to be maintained in the future, which can lead to a large overweight when the weight distribution changes suddenly. Also, many gates are often required to get acceptable accuracy.

In WO 99/44759 portioning method with batching is described where a stream of objects with known individual weight is conveyed, where the items that are not selected for the portion are used as a basis for a subsequent portion. This method is perfectly analogue to the batching method described above.

The problem with this method is how slow it is, especially if the average item weight is low compared to final portion weight, such as the final portion weight may be 5kg, and the average item weight 200g. Approximately 25 items would therefore be needed to make one portion.

One way of improving the speed in generating portions of fixed weight is to use coarse-and fine filling.

US 4,313,507 discloses a method and apparatus for weight portioning and packaging items of varying and variable individual weights such as fruits and vegetables. The first step in the method is designed to be performed swiftly and will normally provide the bulk of the total weight. The second step is a topping-off or trim step designed to achieve the final target weight. The initial target weight is chosen to be less than the final target weight by a weight in excess of the weight of one average article of the population. The steps are performed independently, i.e. the initial filling is performed at an initial weight station, while the topping-off is performed by discharging pre-weighed trim articles into a container 52, which is then moved away to be combined with the initial weight portion to become the final weight portion.

In US 4,010,809 a weighing method is presented wherein a weighing apparatus conveys irregular pieces of products to a grading device for separating the regular pieces into two fractions respectively containing relatively small-sized pieces and relatively larger-sized pieces. A conveyor conveys the larger-sized pieces to a weighing device until a batch of the product is accumulated having a weight slightly less than the required batch weight. A second conveyor adds smaller-sized pieces to the batch until the minimum batch weight is achieved.

In US 4,569,446 a method and apparatus for feeding a product is described. Two pans, an upper and a lower pan are provided with selected apertures therein so that fines will be separated from the remainder of the product and directed into the lower pan. During the normal filling of a weight hopper, both the upper feeder pan and the lower feeder pan will discharge into the weight hopper. When a pre-selected underweight condition occurs, at least a part of the product from the upper pan will be diverted from immediately entering into the weight hopper, while the feeding of the fines will continue so as to bring the weight of the product within the weight hopper up to the pre-selected weight with a minimum of overweight.

In US 3,720, 276 a weighing apparatus comprises two conveyor belts for feeding potatoes to a plurality of weighing devices. One conveyor comprises small potatoes and the other large potatoes. The potatoes are fed through an opening formed in the walls of the conveyors on a weighing pan. Doors are provided over the openings so that the flow of potatoes to the pans may be controlled such that the overweight is minimized.

In WO 83/04306 a method similar to the above references is presented where a bulk material is to be supplied to a weighing container, wherein the material is divided into main material stream and fine adjusting stream.

The problem with these methods is the high overweight, wherein the weight of the last piece determines how much the overweight will be.

This is partly solved in US 4,494,619 where a combinatorial weighing apparatus is described including a main supply unit for supplying items to be weighed into a plurality of weighing sections so as to be distributed radially outward. A circuit presets at least one weighing means which discharges items for rough charging or selects at least one weighing means, which discharges items for rough charging according to a prescribed rule. The combinatorial computing device then calculates the total weight from preset or selected weighing means and selects a combination of weighing machines such that the total weight is obtained with minimum overweight.

The problem here is how complicated this apparatus is, mainly due to the large number of weighing means that are necessary for finishing a batch with a low overweight.

A further problem is the technical problem that arises in refilling the weighing means. If as an example the items in five out of ten weighing means give the optimal combination such that the overweight is minimized, they have to be refilled with a diverting mechanism or similar mechanism. Also, it is obvious that in order to lower the overweight further, a larger number items or portions is necessary. This requires a larger number of weighing means, which may be impossible when the number of items is 20 up to 100 or even more.

**General description of the invention**

It is an object of the present invention to overcome the problems mentioned ealier by providing a fast and simultaneously an accurate method for generating at least one batch by using at least one coarse flow and one fine flow of items, wherein the items in the fine flow form a sequence of n-items. The weight of the n-number of items is registered and stored by weighing means, which gives a weight distribution of the items. Based thereon one or more items in the sequence are selected in obtaining a final batch weight with a minimum overweight.

According to the first aspect the invention comprises a method for generating at least one batch up to a predetermined weight limit with a minimum overweight, the method comprising:

• generating at least a first and a second flow of items, the first flow defining a coarse flow and the second flow a fine flow,

• weighing a plurality of items in the fine flow,

• selecting a predetermined final weight limit for at least one batch,

• determining a coarse weight limit for the at least one batch,

• performing a coarse filling and optionally a fine filling into anitem receiver, while repetitively weighing the items in the item receiver, until the coarse weight limit is completed, wherein the completed coarse weight limit represents the actual coarse weight, and

• performing a fine filling with the fine flow into the item receiver until the predetermined final weight limit of at least one batch is reached,

wherein the fine filling is based on utilizing the result from the weighing of plurality of items in the fine flow in a combination with the actual coarse filling weight limit for selecting at least one item from the fine flow such that the overweight in the batch is minimized.

In the present invention the coarse flow stands for a flow of items that in a given time interval is larger than that for the fine flow. This can be slightly larger or much larger. Furthermore, the items in the coarse flow are not necessary conveyed in an organized way, as is preferred in the fine flow.

Preferably, the remaining items from the fine flow that are not selected for the fine filling are used for the coarse filling in one or more of the remaining item receivers, which will in the discussion be defined as batching bins, and in some embodiments weighing hoppers. It is however also possible that these items are recycled back to the fine and the coarse flow.

The flow can be formed by conveying a single flow of items through a stationary hindrance from which the flow goes in two streams.

The coarse weight limit may be determined from the predetermined weight limit and the weight of n-number items in the following way:

i. determining an average value of the plurality of items in the fine flow,

ii. multiplying the average value with the number of weighed items in the fine flow that are being conveyed and dividing the result with two, thereby obtaining the maximum number of possibilities of the weighed items to finish the selected weight, and

iii. subtracting the results obtained in ii from the predetermined final weight limit of at least one batch.

The average weight limit may also be one or more fixed weight limits. The items may be single items, such as piece of meat or a fish fillet, or a portion of products, whereas the product can be herring, grain or meat portions, i.e. a products where it is necessary to make portions. Further, in one embodiment the portions are generated such that they differ in their weights. This is to generate a weight distribution, which is essential for the fine filling procedure. This improves the statistical approach in the fine-filling that will be referred to later. Also, the number of n-items (single item, or a portion) may be predetermined, such as n=10 or 12 or 20 etc. In still another embodiment other characteristic properties beside the weigh of the items may be used in generating the batch. These can be the size of the product, the type of the product, the surface structure of the product, the color of the product, the softness of the products etc..

Example:

The item is chicken in the form of wings, legs and breast, each piece, which is identified in the fine flow. The coarse-filling is based on filling a mixture of these items up to a coarse limit, and subsequently fine-fill the batch with a chicken breast. The fine-filling, which comprises all these products uses only the chicken breast for the fine-filling. The remaining parts (legs and wings) would be divided between one or more of the remaining batches where fine-filling is not running. The batches would accordingly both comprise a predetermined weight limit and also a criteria for a predetermined number of chicken breasts.

The number of flows defining the coarse and the fine flow may be two or more, respectively. Also, it is preferred that the position of the items, preferably in the fine flow is traced.

Generating the batch begins with the coarse filling. The coarse filling can in one embodiment be based on diverting the items from the coarse flow into the batch for a predefined interval, assuming the weight of items per second is known, and by utilizing the speed of the conveyor, which may be essential. When the coarse weight limit for coarse filling is reached, the fine-filling can start. In one embodiment the computer calculates the difference between the predetermined weight limit and the actual weight of the batch and calculates all combinations by test-fitting one or more of the n-items into the batch so the predetermined weight limit is reached and the overweight is minimum, i.e.:

- determining a batch shortage by means of subtracting the actual coarse weight from the predetermined final weight limit,

- selecting all combinations of items in the fine flow to fit into at least one batch and based thereon determine one or more items such that the total weight of the selected item or selected items exceeds the batch shortage and simultaneously minimizes the overweight, and

- directing the selected items into at least one batch.

Statistical methods can also be used for the fine filling.

Example: When the coarse-flow for batch A is completed, the coarse flow will be directed to batch B and the fine-filling in batch A can be started. If however the coarse-filling in batch B is finished before the fine-filling in batch A, the coarse-flow must either be directed away from the batching bins or be stopped.

In another embodiment, the coarse flow may be based on registering and monitoring the weight of the batch repetitively and based thereon controlling the coarse flow. Further, if the batch is as an example the first batch to be filled, the fine flow can run parallel to the coarse flow and divert items into the same batching bin or another batching bin, instead of retaining the fine flow in a stop position.

Accordingly, it is therefore preferred that the n-items consist of different weights. The remaining items that are not suited for fine filling may be rejected and divided between at least one of the remaining batches and used in the coarse-filling or recycled back to the fine-and or the coarse flow. Further, when the overweight is not acceptable, the batch may be rejected. Preferably, the items are then recycled back to the fine-and/or the coarse flow. This may be solved by arranging one or more dividing boards or flippers below the batching bins for guiding the items or portions into a first and a second position. The first position is used for valid batches and the second is for rejected batches, which can then be automatically or manually recycled back into the system as mentioned before.

If the situation is such that the weight of the batch after the coarse filling is such that the final weight limit is obtained and the overweight is acceptable, the fine-filling will be skipped.

A weighing hopper, preferably with a static scale may be used for registering the batch weight so that the final weight limit is reached the content is released into package and the filling for that batching bin can start again.

To divide a flow between different batches a flipper board may be provided, which for the two-batch systems, has two positions. When the flipper is in the first position, the flow is directed into batch A and into batch B in the second position. The movement of the flipper can be controlled by the processing computer. It is preferred that each conveyor that defines the fine and the coarse flow is provided with one flipper.

In a preferred embodiment the final batch weight after completing the fine filling is compared to the final weight limit, wherein if the actual final weight of the batch is within a predetermined interval the batch is accepted. Otherwise, if it is outside a predetermined interval it is rejected. By monitoring the final batch weight in this way, failures in the test fitting or mechanical failures may be detected.

According to the second aspect the invention comprises an apparatus generating at least one batch up to a predetermined weight limit with a minimum overweight, the apparatus comprising:

- at least a first and a second conveying means for conveying at least a first and a second flows of items, the first flow defining a coarse flow and the second flow a fine flow,

- at least a first weighing means for weighing a plurality of items from the fine flow,

- at least two receiver stations for receiving the items and generating the at least one batch,

- means for selecting a final weight limit,

- means for determining a coarse weight limit,

- at least a first and a second divider for dividing the items between the at least two receiver stations, the first and the second divider being adapted to divide items from the coarse-and the fine flow into one of the at least two receiving stations, respectively,

- a second weighing means for weighing the items in the receiver stations,

- a storage means for storing the result from the first and the second weighing means and the weighing limits,

- a computer system adapted to control the dividers and to utilize the stored results in the storage means for directing the coarse flow and optionally a fine flow into the receiver stations up to the coarse weight limit where the actual coarse weight is determined and subsequently selecting and directing at least one item from the fine flow into the receiver station so that the overweight obtained in the receiver station is minimized.

The apparatus may further comprise, if necessary, of a portioning means for portioning the fine flow into at least one portion in the receiving station (batching bin), preferably a weighing hopper, where the weight of at least one portion is registered. Also, the positions of these items/portions in the fine flow are preferably traced. A second portioning means can be used for portioning the coarse flow into portions. This facilitates the coarse filling. This may be done while conveying a continuous flow of items or by means of directing the stream of items into dividers arranged above the batching bins (receiving hoppers), which direct the coarse flow into the batching bins in portions.

In another embodiment the apparatus comprises means for identifying at least one physical property of at least one portion such as parts of poultry items for batching procedures as described above. This can be done by known methods such as by determining a three dimensional image by recording the top view of an item by means of using a line scan camera and simultaneously record the profile view of the item with a reflecting means as the item is being conveyed.

In still another embodiment the speed of the conveyors is controllable, such that the speed may be lowered, increased or the conveyors may be stopped.

**Detailed description**

In the following the present invention, and in particular preferred embodiments thereof, will be described in greater details in connection with the accompanying drawings in which

Fig. 1 shows a flow diagram for one embodiment of the present invention for a two flow-system,

Fig. 2a and 2b show a top and side perspective of a two flow-system,

Figure 3a and 3b show another embodiment of the present invention, and

Figure 4 shows a portioning device.

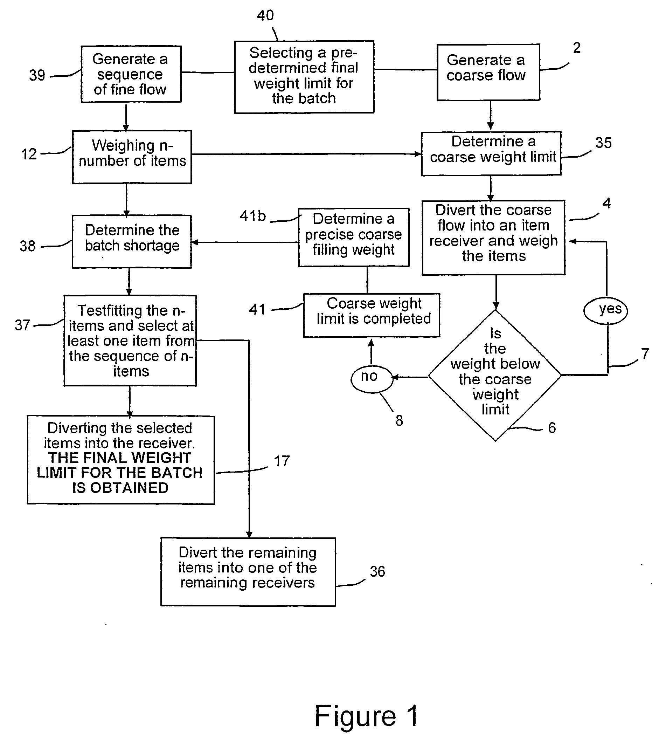

Figure 1 shows a flow diagram describing the main features of the present invention. A predetermined final weight limit of the batch to be generated is determined 40 and the flow of items is divided into coarse flow 2 and a sequence of items defining the fine flow 39, wherein a plurality of the items in the fine flow are weighed 12 and the result stored in a computer system. This result is used for determining the coarse weight limit, through the following equation:

$$CW = P - \frac{n}{2} \cdot \varpi. \qquad (1)$$

$CW$ stands for the coarse weight limit, P for the predetermined final weight limit, n for the number of weighed items in the fine flow and $\bar{\omega}$ for the average weight of the items in the fine flow. The reason for selecting n/2 is that by doing so maximum number of combinations to finish a batch is obtained, given by:

$$C = \frac{n!}{r! \cdot (n-r)!}. \qquad (2)$$

C is the number of combinations, r is the number of items selected from the known items and n is the number of items with known weight (r=n/2). Note that when n is odd, $n/2$ must be rounded. It is irrelevant weather it is up or down to the next integer. Accordingly, the predetermined final weight limit P as well as the average weight limit of the n items in the fine flow must be known for determining the coarse weight limit. The filling into the item receiver comprises two steps:

1. Coarse filling: the items in the coarse flow are diverted 4 into the item receiver, and the weight is repetitively registered. The coarse weight limit has the function as being a reference weight limit for the coarse flow. Frequently, the actual weight in the item receiver is compared to the coarse weight limit. If the actual weight limit is below this reference limit, the coarse flow is continued. When the actual weight is acceptable, e.g. the coarse weight limit is 4900 g and the actual weight is 4920 g, the coarse filling is completed 41, and the precise coarse filling weight is determined 41 b. The deviation from the coarse weight limit may be predetermined such as $\pm 50$ g.

2. Fine filling: the items in the fine flow form a sequence of items or items portions, wherein at least one, preferably most of the items that are being conveyed in the fine flow, have been weighed and the result stored in a computer system. Whereas the actual coarse weight limit is known (4920 g), the batch shortage 38 may be calculated, simply by subtracting the actual coarse weight limit from the predetermined final weight limit, or

$$BS = P - ACW, \qquad (3)$$

where $BS$ stands for the batch shortage, and $ACW$ for the actual coarse filling weight. In a preferred embodiment the n-items are test fitted 37 so the batch shortage is eliminated and the overweight is minimum. Those items that give the minimum overweight from the final weight limit will be diverted into the item receiver where the coarse weight limits is obtained (4920 g) 17, and the remaining items are diverted into one of the remaining item receivers. In one embodiment the item receivers are weighing hoppers. The number of the item receivers is two or more, such as three, four etc.

Initially and prior to the fine filling procedure, the fine-and the coarse filling may run parallel. This can be the case when the item receiver is empty. Instead of directing only the coarse flow into the first batching bin, the coarse flow and the fine flow may be directed into the first batching bin. However, the main object of the present invention is as described before to utilize the coarse flow for obtaining a coarse weight limit that is lower than the final weight limit, and use the fine flow for obtaining the predetermined final weight limit, with the aim of minimizing the overweight. This enhances the time needed to obtain the final weight limit significantly. Also, the conveyor speed is preferably adjustable. This is important when the coarse filling in one batch is completed but not the fine filling in the other batch, assuming the number of batches is two. The weighing means in the item receiver may be static scale and in the fine flow, one or more dynamic scales.

The invention is further illustrated by the following example, which is not intended to be limiting in any way.

**Example.**

We make the following assumptions

    1. The final weight limit is 10,000 g.
    2. There are only two streams of items, let us call them the coarse and the fine stream.
    3. The items are weighed in the fine stream.
    4. Average weight of the portions is 500g.
    5. There are 10 portions in the system with known weight.
    6. There are two weighing hoppers used to make the batches in, let us call them A and B.

At the beginning both the fine stream and the coarse stream are directed into hopper A. The maximum number of combinations to finish a batch is obtained by selecting five out of the ten known batches. The relation is given:

$$\text{Combinations} = 10! \, / \, (5! \, (10 - 5)!) = 252$$

Therefore the filling limit for the coarse filling is set at: 10,000 - 5 x 500g = 7,500 g. When this limit has been reached both coarse and fine-fillings will go into weighing hopper B, until a stable reading of the exact weight in weighing hopper A has been obtained. The coarse filling process is not exact and let us assume that the exact weight in weighing hopper A is 7834.3 g. Let us assume that the known fine filling weights in the system are:

[536.6], 455.1, [489.6], 517.8, [562.8], 562.4, 493.8, [580.1], 429.7, 579.8

Then the system software checks which portions are best to use to finish the batch with the minimum overweight. The result from that optimisation is that it is best to use portions, 1, 3, 5 and 8 that is the ones in square parenthesis in the list above. The actual weight of the batch will then be:

$$\text{Batch weight} = 7834.3 + 536.6 + 489.6 + 562.8 + 580.1 = 10,003.4 \text{ g}$$

The portions which are not used to finish the batch in weighing hopper A will go into weighing hopper B where coarse filling is being done. In the system it is possible to verify that the actual weight of the batch being made is correct, since the final batch is made in a weighing hopper. Check weighing is common in the food industry and it is beneficial to be able to check weigh in the batching system itself.

When determining the coarse filling limit of 7,500 g the system used statistics of the weight of the portions. It is also possible to use the actual weight of the portions in the system. In this case the average of the batches in the system is 520.8 g and the coarse filling limit could therefore be set at 10,000 - 5 x 520,8 = 7.396 g. Other more sophisticated methods are also possible to use to determine the coarse filling limit both from the statistics of the portions, the known portions in the system and from the accuracy statistics on the coarse filling process.

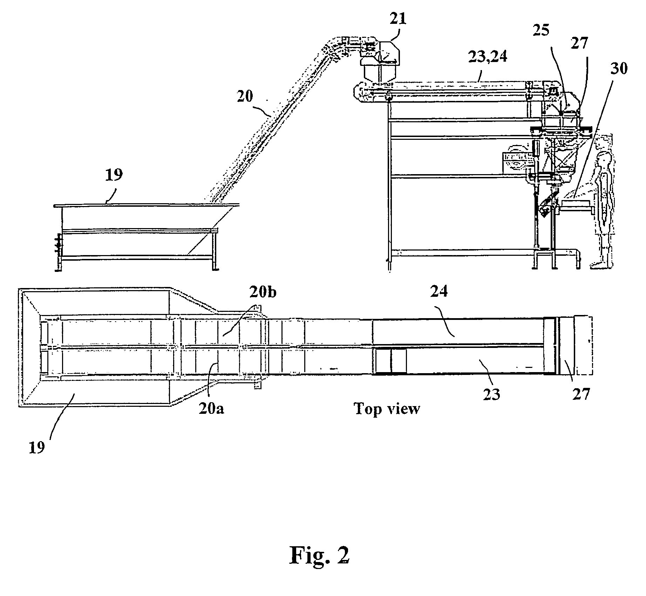

Figure 2 shows a side view of one embodiment of the invention, where two flows of items are generated from a plurality of items 19, where the items are stored. The items can for example be herring, grain or even meat portions. This system can also be integrated in another processing line, so the two or more flows already exist.

The items are conveyed with a first and a second conveyor 20a, 20b, from where the items are stored in a large container 19, to a weighing and/or portion device where items in one of the two flows are weighed, wherein the result is stored in a computer system. At this position portions may be generated and weighed for one of the two flows. This is necessary for products such as herrings or grains. The flow with the weighed items or portions defines the fine flow 23, while the other defines the coarse flow 24. Accordingly, both the flows from the first and the second conveyors 20a, 20b, are released on a third conveyor that conveys the fine flow 23 and a fourth conveyor that conveys the coarse flow 24 towards two or more batching bins 27 where batches of predetermined weight are to be generated. As described in the preceding example, the typical filling procedures comprises performing a coarse filling up to a coarse filling limit, wherein the actual coarse weight is utilized with the predetermined final batch weight limit to perform a test fitting with the items or portion of items in the fine flow, so that the overweight of the final batch weight will be minimum. These calculations are done with a computer system, or a central processor, which controls a dividing board 25 such that the correct items or portion of items in the fine flow are diverted into the selected bathing bin. The items that are not suited for the fine filling are diverted into the second batching bin and used for the coarse filling. Further, in a preferred embodiment the computer system further controls the speed of the conveyors.

However, the arrangement of the conveyors is not essential here. It is also possible to utilize two conveyors, and position the portion device as well as the weighing device at the opposite end to the item receiver.

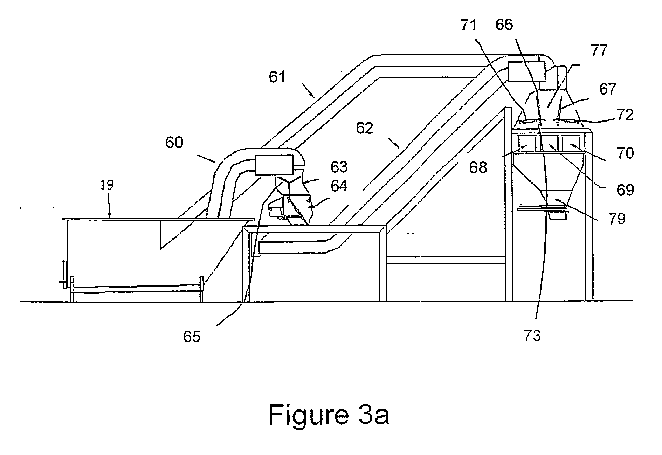

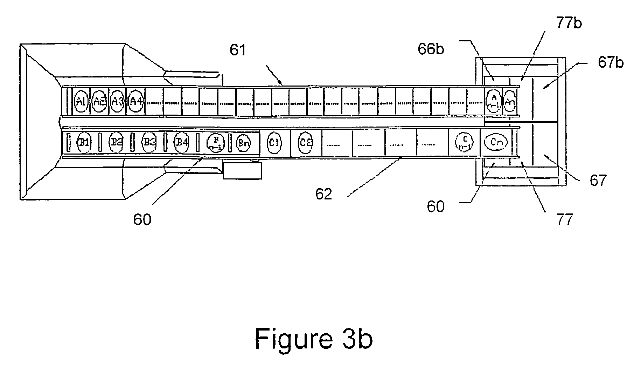

Figure 3a and 3b show another embodiment of the present invention where the arrangement of the first and the second conveyor 60, 61 has been changed. Figure 3a shows a portioning device 63, comprising three boards arranged on a horizontal axis 65 forming three Y-shape bins. The number of Y-shaped bins may as well be larger than three. When the stream of items that are conveyed with the first conveyor fall into the upward facing Y-shaped bin it rotates approximately 120° and empties thereby the portion, and is prepared for receiving the next portion. This may occur as one or more items falling therein, or it may also be based on rotating the horizontal axis at predetermined time interval, or when a predetermined weight is obtained in the Y-shape bin. A weighing hopper is arranged under the portioning device 64 that weighs the portions. This weighing hopper is provided with a single dividing board, that through a single motion empties the weighed portion, and is prepared to receive the next portion to be weighed. All the weighing results are stored in a computer system and utilized for the fine filling in the later stage. In another embodiment, the portioning device has also the function as a weighing hopper. Accordingly, the weighing hopper 64 arranged under the portioning device would therefore not be necessary.

After generating a plurality of portions and registering their weight the items form an unchangeable sequence that is conveyed with a third conveyor 62 towards the item receivers, which are three 68-70 as shown in Fig. 3b, where the batches are to be generated. Preferably, the position of the items is traced, such as through the timing of releasing the items on the third conveyor by utilizing the conveyor speed.

Parallel to this the coarse flow defined by the second conveyor 61 conveys a flow of items directly toward the item receivers (receiver stations) or weighing hoppers 68-70 as shown in Fig. 3b. Shown is one set of two dividing boards 66, 67 for dividing the items between the three batching bins or receiving hoppers. Each dividing board is arranged on a rotational axis at the bottom of the dividing board 73, 74 and mounted to a first and a second pneumatic cylinder 71, 72, which through expanding or contracting movement controls the movement of the dividing boards. In Fig. 3a, both the cylinders are in a contracted position. In this position the items fall directly into the middle item receiver 69. If as an example the first cylinder moves from a contracted position to a expanded position the items are guided into the item receiver 68.

The set of dividing boards 66, 67 are provided for both the fine flow as well as the coarse flow. In the embodiment shown in Fig. 3a, the number of dividing boards is therefore in total four.

The process of generating a batch with a minimum overweight by utilizing the embodiment in Fig. 3a has been described earlier in the text. When a batch with a final weight limit is reached it is emptied. This portion may subsequently be pre-packed 29 at a pre-packing station.

Figure 3b shows an overview from Fig 3a, showing well the fine flow with a plurality of items or portion of items with known weight c1 - cn. The coarse stream consists of portions with unknown weights, a1-an, as does the fine stream, b1-bn, before it is weighed.

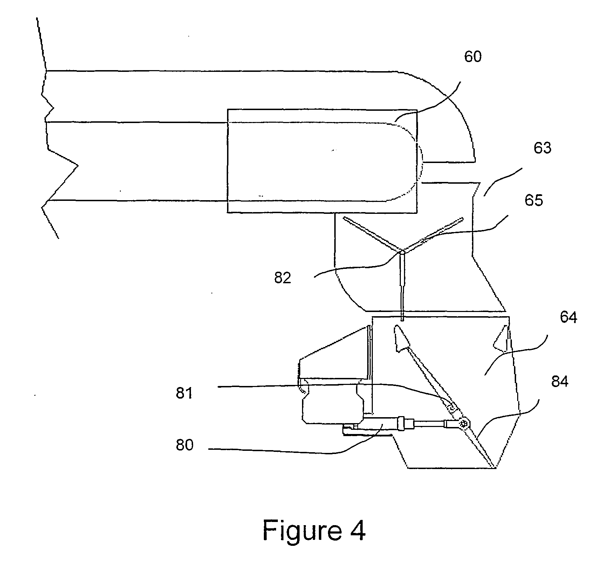

Figure 4 shows a closer view of the portioning device 63 that receives items from the first conveyor 60. In this embodiment the number of the Y-shaped bins is three and are rotateable around a rotation axis 82. In another embodiment the number of the Y-shape bins is four, five etc. As mentioned earlier in the discussion, the rotation, whereas the portions are emptied into the weighing hopper, may be based on predetermined time interval or the weight in the Y-shaped bin or other predefined criteria. The weighing hopper 64 receives the portion and weighs it. When the weight is well stabilized it is stored in a computer system, and the portion is emptied through a single motion of a rotatable board 84 that rotates around a rotation axis 81 from a first position to a second position. The movement is preferably controlled through a computer controlled pneumatic cylinder 80 that through an expansion and contraction movement moves the boards 84 from a first position to a second position.

**Claims**

1. A method for generating at least one batch up to a predetermined weight limit with a minimum overweight, the method comprising:

   • generating at least a first and a second flow of items, the first flow defining a coarse flow and the second flow a fine flow,
   • weighing a plurality of items in the fine flow,
   • selecting a predetermined final weight limit for at least one batch,
   • determining a coarse weight limit for the at least one batch,
   • performing a coarse filling and optionally a fine filling into an item receiver, while repetitively weighing the items in the item receiver, until the coarse weight limit is completed, wherein the completed coarse weight limit represents the actual coarse weight, and
   • performing a fine filling with the fine flow into the item receiver until the predetermined final weight limit of at least one batch is reached,

   **characterized in that** the coarse weight limit is determined based on statistical information of the items or a portion of items in the fine flow, and wherein the fine filling is based on utilizing the result from the weighing of plurality of items in the fine flow in a combination with the actual coarse filling weight for selecting at least one item from the fine flow such that the overweight in the batch is minimized.

2. A method according to claim 1, wherein the remaining items from the fine flow that are not selected for the fine filling are used for the coarse filling in one or more of the remaining item receivers.

3. A method according to any of the preceding claims, wherein determining the coarse weight limit comprises:

   i. determining an average value of the plurality of items in the fine flow,
   ii. multiplying the average value with the number of weighed items in the fine flow that are being conveyed and dividing the result with two, thereby obtaining the maximum number of possibilities of the weighed items to finish the selected weight, and
   iii. subtracting the result obtained in ii from the predetermined final weight limit of at least one batch.

4. A method according to any of the preceding claims, wherein the coarse weight limit is a fixed weight limit.

5. A method according to any of the preceding claims, further comprising means for dividing the fine flow into a plurality of portions and subsequently weighing each portion.

6. A method according to claim 5, wherein the portions have at least two different weights.

7. A method according to any of the preceding claims, wherein the position of the items in the fine flow is traced.

8. A method according to any of the preceding claims, wherein selecting at least one item from the fine flow is based on test-fitting items or portion of items into at least one batch so that the predetermined final weight limit of at least one batch is fulfilled and the overweight is minimized.

9. A method according to claim 8, wherein the test-fitting comprises:

   • determining a batch shortage by means of subtracting the actual coarse weight from the predetermined final weight limit,
   • selecting all combinations of items in the fine flow to fit into at least one batch and based thereon determine one or more items such that the total weight of the selected item or selected items exceeds the batch shortage and simultaneously minimizes the overweight, and
   • directing the selected items into at least one batch.

10. A method according to any of the preceding claims, wherein the number of items from the fine flow into at least one batch is predetermined.

11. A method according to any of the preceding claims, wherein the remaining items that are not suited for fine-filling are rejected and removed from the fine flow.

12. A method according to claim 11, wherein the rejected items are recycled back into the system and used again for the fine-filling and/or coarse-filling.

13. A method according to any of the preceding claims, further comprising means for characterizing at least one characteristic property of at least one item from the fine flow and optionally the coarse flow of items.

14. A method according claim 13, wherein the fine filling further comprises selecting at least one item with respect to the at least one characteristic property.

15. A method according to any of the preceding claims, wherein the number of flows of items is two, one fine flow and one coarse flow.

16. A method according to any of the preceding claims, wherein after completing at least one batch the actual final weight is compared to the final weight limit.

17. A method according to any of the preceding claims, wherein if the actual final weight of the batch is within a predetermined interval the batch is accepted.

18. A method according to any of the preceding claims, wherein if the actual final weight of the batch is outside a predetermined interval the batch is rejected.

19. An apparatus generating at least one batch up to a predetermined weight limit with a minimum overweight, the apparatus comprising:

> • at least a first (20a) and a second (20b) conveying means for conveying at least a first and a second flows of items, the first flow defining a coarse flow (24) and the second flow a fine flow (23),
> • at least a first weighing (21) means for weighing a plurality of items from the fine flow,
> • at least two receiver stations (27) for receiving the items and generating the at least one batch,
> • means for selecting a final weight limit,
> • means for determining a coarse weight limit,
> • at least a first (66) and a second (67) divider for dividing the items between the at least two receiver stations (27), the first (66) and the second (67) divider being adapted to divide Items from the coarse- (24) and the fine flow (23) into one of the at least two receiving stations (27), respectively,
> • a second weighing means (68 -70) for weighing the items in the receiver stations,
> • a storage means for storing the results from the first (21) and the second (68-70) weighing means and the weighing limits,
> • a computer system adapted to control the dividers (66,67) and to utilize the stored results in the storage means for directing the coarse flow (24) and optionally a fine flow (23) into the receiver stations (21) up to the coarse weight limit where the actual coarse weight is determined,
> • **characterized in that** the means for determining the coarse weight limit is adapted to determine the coarse weight limit based on statistical information of the items or portion of items in the fine flow (23), and that the computer system is adapted to subsequently select and direct at least one item from the fine flow (23) into the receiver stations (21) so that the overweight obtained in the receiver station (21) is minimized.

20. An apparatus according to claim 19, further comprising a portioning means for generating at least one portion from the items, wherein the weight of at least one portion along with its position is identified.

21. An apparatus according to claim 20 wherein the portioning means comprises a plurality of boards mounted to a rotation axis and extending radial outwards from the rotation axis forming thereby a plurality of Y-shape bins.

22. An apparatus according claim 21, wherein the Y-shape bins comprise means for weighing the items therein.

23. An apparatus according to any of the claims 19-22, further comprising means for identifying at least one physical property of at least one item and/or portion.

24. An apparatus according claim 23, wherein the physical property is the shape of the object.

**25.** An apparatus according to any of the claims 19-24, wherein the receiver station is a weighing hopper.

**26.** An apparatus according to claim 25, wherein the weighing hopper comprises a static scale.

**27.** An apparatus according to any of the claims 19-26, wherein the at least first weighing means is a dynamic scale.

**28.** An apparatus according to any of the claims 19-27, wherein the conveyor speed is controllable.

**Patentansprüche**

**1.** Verfahren zum Erzeugen mindestens eines Loses bis zu einer vorher festgelegten Gewichtsgrenze mit einem minimalen Übergewicht, wobei das Verfahren Folgendes umfasst:

- Erzeugen mindestens eines ersten und eines zweiten Produktstroms, wobei der erste Strom einen Grobstrom und der zweite Strom einen Feinstrom darstellt,
- Wiegen mehrerer Produkte im Feinstrom,
- Auswählen einer vorher festgelegten endgültigen Gewichtsgrenze für mindestens ein Los,
- Festlegen einer ungefähren Gewichtsgrenze für mindestens ein Los,
- Ausführen einer Grobfüllung und optional einer Feinfüllung in eine Produktaufnahme, während die Produkte in der Produktaufnahme wiederholt gewogen werden, bis die Grobgewichtsgrenze erreicht ist, wobei die erreichte Grobgewichtsgrenze das eigentliche Grobgewicht darstellt, und
- Ausführen einer Feinfüllung mit dem Feinstrom in die Produktaufnahme bis die vorher festgelegte endgültige Gewichtsgrenze mindestens eines Loses erreicht ist,

**dadurch gekennzeichnet, dass** die Grobgewichtsgrenze auf Grundlage statistischer Daten der Produkte oder einer Portion der Produkte in dem Feinstrom bestimmt wird, und wobei das Feinfüllen auf der Verwendung des Ergebnisses der Wiegung mehrerer Produkte in dem Feinstrom in Verbindung mit dem eigentlichen Grobfüllgewicht zum Auswählen mindestens eines Produktes aus dem Feinstrom beruht, so dass das Übergewicht in dem Los minimiert wird.

**2.** Verfahren nach Anspruch 1, wobei die verbleibenden Produkte aus dem Feinstrom, die für die Feinfüllung nicht ausgewählt wurden, für die Grobfüllung in einem oder in mehreren der verbleibenden Produktaufnahmen verwendet werden.

**3.** Verfahren nach einem der vorhergehenden Ansprüche, wobei das Bestimmen der Grobgewichtsgrenze Folgendes umfasst:

i. Bestimmen eines Durchschnittswertes mehrerer Produkte in dem Feinstrom,
ii. Multiplizieren des Durchschnittswertes mit der Anzahl der gewogenen Produkte in dem Feinstrom, die befördert werden, und Dividieren des Ergebnisses durch zwei, so dass die maximale Anzahl der Möglichkeiten erhalten wird, die vorhanden sind, damit die gewogenen Produkte das gewählte Gewicht erreichen können, und
iii. Subtrahieren des in ii. aus der vorher festgelegten endgültigen Gewichtsgrenze mindestens eines Loses erhaltenen Ergebnisses.

**4.** Verfahren nach einem der vorhergehenden Ansprüche, wobei die Grobgewichtsgrenze eine feststehende Gewichtsgrenze ist.

**5.** Verfahren nach einem der vorhergehenden Ansprüche, ferner umfassend Mittel zum Teilen des Feinstroms in mehrere Portionen und anschließendes Wiegen jeder Portion.

**6.** Verfahren nach Anspruch 5, wobei die Portionen mindestens zwei unterschiedliche Gewichte aufweisen.

**7.** Verfahren nach einem der vorhergehenden Ansprüche, wobei die Position der Produkte in dem Feinstrom verfolgt wird.

**8.** Verfahren nach einem der vorhergehenden Ansprüche, wobei das Auswählen mindestens eines Produktes aus dem Feinstrom auf einer Probefüllung von Produkten oder Produktportionen zu mindestens einem Los beruht, so dass die vorher festgelegte endgültige Gewichtsgrenze mindestens eines Loses erreicht und das Übergewicht minimiert wird.

9.  Verfahren nach Anspruch 8, wobei die Probefüllung Folgendes umfasst:

- Bestimmen eines Losfehlbedarfs durch Subtrahieren des aktuellen Grobgewichts von der vorher festgelegten endgültigen Gewichtsgrenze,
- Auswählen aller Produktkombinationen in dem Feinstrom, die in mindestens ein Los passen, und auf dieser Grundlage, Bestimmen eines oder mehrerer Produkte, so dass das Gesamtgewicht des ausgewählten Produktes oder der ausgewählten Produkte den Losfehlbedarf überschreitet und gleichzeitig das Übergewicht minimiert, und
- Lenken der ausgewählten Produkte in mindestens ein Los.

10. Verfahren nach einem der vorhergehenden Ansprüche, wobei die Anzahl der Produkte aus dem Feinstrom in mindestens ein Los vorher festgelegt wird.

11. Verfahren nach einem der vorhergehenden Ansprüche, wobei die verbleibenden Produkte, die für die Feinfüllung ungeeignet sind, zurückgewiesen und aus dem Feinstrom entfernt werden.

12. Verfahren nach Anspruch 11, wobei die zurückgewiesenen Produkte in das System zurückgeführt und der Feinfüllung und/oder der Grobfüllung erneut zugeführt werden.

13. Verfahren nach einem der vorhergehenden Ansprüche, ferner umfassend ein Mittel zum Bestimmen mindestens einer charakteristischen Eigenschaft mindestens eines Produktes aus dem Feinstrom und optional der Grobstromprodukte.

14. Verfahren nach Anspruch 13, wobei das Feinfüllen ferner das Auswählen mindestens eines Produktes im Hinblick auf die mindestens eine charakteristische Eigenschaft umfasst.

15. Verfahren nach einem der vorhergehenden Ansprüche, wobei die Anzahl der Produktströme zwei, ein Feinstrom und ein Grobstrom, ist.

16. Verfahren nach einem der vorhergehenden Ansprüche, wobei nach dem Fertigstellen mindestens eines Loses das aktuelle Endgewicht mit der endgültigen Gewichtsgrenze verglichen wird.

17. Verfahren nach einem der vorhergehenden Ansprüche, wobei das Los angenommen wird, wenn sich das aktuelle endgültige Gewicht des Loses innerhalb eines vorher festgelegten Intervalls befindet.

18. Verfahren nach einem der vorhergehenden Ansprüche, wobei das Los zurückgewiesen wird, wenn sich das aktuelle endgültige Gewicht des Loses außerhalb eines vorher festgelegten Intervalls befindet.

19. Vorrichtung zum Erzeugen mindestes eines Loses bis zu einer vorher festgelegten Gewichtsgrenze mit einem minimalen Übergewicht, wobei die Vorrichtung Folgendes umfasst:

- mindestens ein erstes (20a) und ein zweites (20b) Beförderungsmittel zum Befördern mindestens eines ersten und eines zweiten Produktstroms, wobei der erste Strom einen Grobstrom (24) und der zweite Strom einen Feinstrom (23) beschreibt,
- mindestens ein erstes Wiegemittel (21) zum Wiegen mehrerer Produkte aus dem Feinstrom,
- mindestens zwei Aufnahmestationen (27) zum Aufnehmen der Produkte und Erzeugen des mindestens einen Loses,
- Mittel zum Auswählen einer endgültigen Gewichtsgrenze,
- Mittel zum Bestimmen einer Grobgewichtsgrenze,
- mindestens einen ersten (66) und einen zweiten (67) Teiler zum Teilen der Produkte zwischen den mindestens zwei Aufnahmestationen (27), wobei der erste (66) und der zweite (67) Teiler geeignet sind, Produkte aus dem Grob- (24) und dem Feinstrom (23) jeweils in eine der mindestens zwei Aufnahmestationen (27) zu teilen,
- zweites Wiegemittel (68 - 70) zum Wiegen der Produkte in den Aufnahmestationen,
- ein Speichermittel zum Speichern der Ergebnisse aus dem ersten (21) und dem zweiten (68 - 70) Wiegemittel und der Wiegegrenzen,

- ein Rechnersystem, das geeignet ist, die Teiler (66, 67) zu steuern und die gespeicherten Ergebnisse in dem Speichermittel zum Lenken des Grobstroms (24) und optional eines Feinstroms (23) in die Aufnahmestationen (21) bis zur Grobgewichtsgrenze zu verwenden, an der das aktuelle Grobgewicht bestimmt wird,
- **dadurch gekennzeichnet, dass** das Mittel zum Bestimmen der Grobgewichtsgrenze geeignet ist, die Grobgewichtsgrenze auf der Grundlage der statistischen Daten der Produkte oder der Produktportion in dem Feinstrom (23) zu bestimmen, und dass das Rechnersystem geeignet ist, danach mindestens ein Produkt aus dem Feinstrom (23) in die Aufnahmestationen (21) auszuwählen und zu lenken, so dass das in der Aufnahmestation (21) erhaltene Übergewicht minimiert wird.

20. Vorrichtung nach Anspruch 19, die ferner ein Portionierungsmittel zum Erzeugen mindestens einer Produktportion umfasst, wobei das Gewicht mindestens einer Portion mit seiner Position bestimmt wird.

21. Vorrichtung nach Anspruch 20, wobei das Portionierungsmittel mehrere Platten umfasst, die an einer Rotationsachse befestigt sind und sich radial auswärts von der Rotationsachse erstrecken und **dadurch** mehrere y-förmig ausgebildete Eimer bilden.

22. Vorrichtung nach Anspruch 21, wobei die y-förmigen Eimer Mittel zum Wiegen der Produkte darin umfassen.

23. Vorrichtung nach einem der Ansprüche 19 - 22, ferner umfassend ein Mittel zum Kennzeichnen mindestens einer physikalischen Eigenschaft mindestens eines Produktes und/oder einer Portion.

24. Vorrichtung nach Anspruch 23, wobei die physikalische Eigenschaft die Form des Gegenstandes ist.

25. Vorrichtung nach einem der Ansprüche 19 - 24, wobei die Aufnahmestation ein Wiegetrichter ist.

26. Vorrichtung nach Anspruch 25, wobei der Wiegetrichter eine statische Waage umfasst.

27. Vorrichtung nach einem der Ansprüche 19 - 26, wobei das mindestens eine Wiegemittel eine dynamische Waage ist.

28. Vorrichtung nach einem der Ansprüche 19 - 27, wobei die Fördergeschwindigkeit steuerbar ist.

## Revendications

1. Procédé pour générer au moins un lot jusqu'à une limite de poids prédéterminée avec un surpoids minimum, le procédé comprenant les étapes consistant à :

   * générer au moins un premier flux d'éléments et un deuxième flux d'éléments, le premier flux définissant un flux grossier et le deuxième flux définissant un flux fin,
   * peser une pluralité d'éléments dans le flux fin,
   * sélectionner une limite de poids final prédéterminée pour au moins un lot,
   * déterminer une limite de poids grossier pour l'au moins un lot,
   * effectuer un remplissage grossier et optionnellement un remplissage fin dans un récepteur d'éléments, tout en pesant répétitivement les éléments dans le récepteur d'éléments, jusqu'à ce que la limite de poids grossier soit réalisée, dans lequel la limite de poids grossier réalisée représente le poids grossier réel, et
   * effectuer un remplissage fin avec le flux fin dans le récepteur d'éléments jusqu'à ce que la limite de poids final prédéterminée d'au moins un lot soit atteinte,

   **caractérisé en ce que** la limite de poids grossier est déterminée sur la base d'informations statistiques des éléments ou d'une partie des éléments dans le flux fin, et dans lequel le remplissage fin est basé sur l'utilisation du résultat du pesage de la pluralité d'éléments dans le flux fin en combinaison avec le poids de remplissage grossier réel pour sélectionner au moins un élément dans le flux fin de sorte que le surpoids dans le lot soit minimisé.

2. Procédé selon la revendication 1, dans lequel les éléments restants dans le flux fin qui ne sont pas sélectionnés pour le remplissage fin sont utilisés pour le remplissage grossier dans un ou plusieurs des récepteurs d'éléments restants.

3. Procédé selon l'une quelconque des revendications précédentes, dans lequel la détermination de la limite de poids grossier comprend les étapes consistant à :

> i. déterminer une valeur moyenne de la pluralité d'éléments dans le flux fin,
> ii. multiplier la valeur moyenne par le nombre d'éléments pesés dans le flux fin qui sont transportés et diviser le résultat par deux, en obtenant de ce fait le nombre maximum de possibilités d'éléments pesés pour finir le poids sélectionné, et
> iii. soustraire le résultat obtenu à l'étape ii à la limite de poids final prédéterminée d'au moins un lot.

4. Procédé selon l'une quelconque des revendications précédentes, dans lequel la limite de poids brut est une limite de poids fixe.

5. Procédé selon l'une quelconque des revendications précédentes, comprenant en outre des moyens pour diviser le flux fin en une pluralité de portions puis peser chaque portion.

6. Procédé selon la revendication 5, dans lequel les portions ont au moins deux poids différents.

7. Procédé selon l'une quelconque des revendications précédentes, dans lequel la position des éléments dans le flux fin est tracée.

8. Procédé selon l'une quelconque des revendications précédentes, dans lequel la sélection d'au moins un élément dans le flux fin est basée sur un test de correspondance d'éléments ou d'une partie d'éléments dans au moins un lot de sorte que la limite de poids final prédéterminée d'au moins un lot est respectée et le surpoids est minimisé.

9. Procédé selon la revendication 8, dans lequel le test de correspondance comprend les étapes consistant à :

> * déterminer un manque de lot au moyen de la soustraction du poids grossier réel à la limite de poids final prédéterminée,
> * sélectionner toutes les combinaisons d'éléments dans le flux fin pour correspondre à au moins un lot et sur la base de cela déterminer un ou plusieurs éléments de sorte que le poids total de l'élément sélectionné ou des éléments sélectionnés dépasse le manque de lot et minimiser simultanément le surpoids, et
> * diriger les éléments sélectionnés dans au moins un lot.

10. Procédé selon l'une quelconque des revendications précédentes, dans lequel le nombre d'éléments du flux fin dans au moins un lot est prédéterminé.

11. Procédé selon l'une quelconque des revendications précédentes, dans lequel les éléments restants qui ne sont pas adaptés au remplissage fin sont rejetés et éliminés du flux fin.

12. Procédé selon la revendication 11, dans lequel les éléments rejetés sont recyclés dans le système et utilisés à nouveau pour le remplissage fin et/ou le remplissage grossier.

13. Procédé selon l'une quelconque des revendications précédentes, comprenant en outre des moyens pour caractériser au moins une propriété caractéristique d'au moins un élément du flux fin et optionnellement du flux grossier d'éléments.

14. Procédé selon la revendication 13, dans lequel le remplissage fin comprend en outre l'étape consistant à sélectionner au moins un élément en ce qui concerne l'au moins une propriété caractéristique.

15. Procédé selon l'une quelconque des revendications précédentes, dans lequel le nombre de flux d'éléments est égal à deux, à savoir un flux fin et un flux grossier.

16. Procédé selon l'une quelconque des revendications précédentes, dans lequel après avoir réalisé au moins un lot, le poids final réel est comparé à la limite de poids final.

17. Procédé selon l'une quelconque des revendications précédentes, dans lequel si le poids final réel du lot est à l'intérieur d'un intervalle prédéterminé, le lot est accepté.

18. Procédé selon l'une quelconque des revendications précédentes, dans lequel si le poids final réel du lot est à l'extérieur d'un intervalle prédéterminé, le lot est rejeté.

19. Appareil générant au moins un lot jusqu'à une limite de poids prédéterminée avec un surpoids minimum, l'appareil comprenant :

* au moins un premier (20a) et un deuxième (20b) moyens de transport pour transporter au moins un premier et un deuxième flux d'éléments, le premier flux définissant un flux grossier (24) et le deuxième flux un flux fin (23),
* au moins un premier moyen de pesage (21) pour peser une pluralité d'éléments du flux fin,
* au moins deux postes récepteurs (27) pour recevoir les éléments et générer l'au moins un lot,
* des moyens pour sélectionner une limite de poids final,
* des moyens pour déterminer une limite de poids grossier,
* au moins un premier (66) et un deuxième (67) diviseurs pour diviser les éléments entre les au moins deux postes récepteurs (27), le premier (66) et le deuxième (67) diviseurs étant adaptés pour diviser des éléments du flux grossier (24) et du flux fin (23) respectivement dans l'un des au moins deux postes récepteurs (27),
* un deuxième moyen de pesage (68 - 70) pour peser les éléments dans les postes récepteurs,
* un moyen de stockage pour stocker les résultats du premier (21) et du deuxième (68 - 70) moyens de pesage et les limites de pesage,
* un système d'ordinateur adapté pour commander les diviseurs (66, 67) et utiliser les résultats stockés dans les moyens de stockage pour diriger le flux grossier (24) et optionnellement un flux fin (23) dans les postes récepteurs (21) jusqu'à la limite de poids grossier où le poids grossier réel est déterminé,
* **caractérisé en ce que** les moyens pour déterminer la limite de poids grossier sont adaptés pour déterminer la limite de poids grossier sur la base d'informations statistiques des éléments ou d'une partie des éléments dans le flux fin (23), et **en ce que** le système d'ordinateur est adapté pour ensuite sélectionner et diriger au moins un élément dans le flux fin (23) dans les postes récepteurs (21) de sorte que le surpoids obtenu dans le poste récepteur (21) soit minimisé.

20. Appareil selon la revendication 19, comprenant en outre un moyen de mise en portion pour générer au moins une portion à partir des éléments, dans lequel le poids d'au moins une portion avec sa position est identifié.

21. Appareil selon la revendication 20, dans lequel le moyen de mise en portion comprend une pluralité de panneaux montés sur un axe de rotation et s'étendant radialement vers l'extérieur à partir de l'axe de rotation, en formant de ce fait une pluralité de casiers en forme de Y.

22. Appareil selon la revendication 21, dans lequel les casiers en forme de Y comprennent des moyens pour peser les éléments à l'intérieur de ceux-ci.

23. Appareil selon l'une quelconque des revendications 19 à 22, comprenant en outre des moyens pour identifier au moins une propriété physique d'au moins un élément et/ou une portion.

24. Appareil selon la revendication 23, dans lequel la propriété physique est la forme de l'objet.

25. Appareil selon l'une quelconque des revendications 19 à 24, dans lequel le poste récepteur est une trémie de pesage.

26. Appareil selon la revendication 25, dans lequel la trémie de pesage comprend une balance statique.

27. Appareil selon l'une quelconque des revendications 19 à 26, dans lequel l'au moins un premier moyen de pesage est une balance dynamique.

28. Appareil selon l'une quelconque des revendications 19 à 27, dans lequel la vitesse du transporteur peut être commandée.

40

Selecting a pre-
determined final
weight limit for
the batch

39 — Generate a
sequence
of fine flow

Generate a
coarse flow 2

12 — Weighing n-
number of items

Determine a
coarse weight limit 35

41b — Determine a
precise coarse
filling weight

Divert the coarse
flow into an item
receiver and weigh
the items 4

38 — Determine the
batch shortage

37 — Testfitting the n-
items and select at
least one item from
the sequence of n-
items

41 — Coarse weight
limit is completed

yes

Is
the
weight below
the coarse
weight
limit

7

no

8

6

Diverting the selected
items into the receiver.
**THE FINAL WEIGHT
LIMIT FOR THE BATCH
IS OBTAINED**

17

Divert the remaining
items into one of the
remaining receivers 36

# Figure 1

**Fig. 2**

Figure 3a

Figure 3b

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9944759 A
- US 4313507 A
- US 4010809 A
- US 4569446 A
- US 3720276 A
- WO 8304306 A
- US 4494619 A